# EUROPÄISCHE PATENTSCHRIFT

(11) **EP 3 049 245 B1**
(45) Veröffentlichungstag und Bekanntmachung des Hinweises auf die Patenterteilung: **19.05.2021**
(21) Anmeldenummer: 14786619.8
(22) Anmeldetag: 22.09.2014
(51) Int. Cl.: B32B 5/02, B32B 5/12, B32B 5/26, B32B 7/12, B63H 9/067, D06M 17/04, D06M 17/10

(54) **SEGELTUCH AUS FASERVLIESSTOFF**
SAILCLOTH MADE OF BONDED-FIBER FABRIC
TOILE POUR VOILES EN NON-TISSÉ DE FIBRES

(30) Priorität: 23.09.2013 DE 102013015669
(43) Veröffentlichungstag der Anmeldung: 03.08.2016
(73) Patentinhaber: Dimension-Polyant GmbH, 47906 Kempen (DE)
(72) Erfinder: SCHILLINGS, Heiner, 52525 Heinsberg (DE); LAURENZATTO, Luc, 13008 Marseille (FR)
(74) Vertreter: Schneiders, Josef
(86) Internationale Anmeldenummer: PCT/EP2014/070088
(87) Internationale Veröffentlichungsnummer: WO 2015/040205

(56) Entgegenhaltungen:
- EP-A1- 1 114 771
- EP-A1- 2 578 734
- WO-A1-01/21383
- WO-A1-2014/076540
- DE-A1- 3 718 343

## Beschreibung

Die Erfindung betrifft ein Segeltuch mit zwei äusseren Lagen und wenigstens einer inneren Lage aus Verstärkungsfilamenten oder - garnen, wobei die beiden äusseren Lagen aus Textillagen aus einem Faservliesstoff mit bidirektional ausgerichteten Filamenten bestehen.

Bei der Fertigung von Hochleistungssegeln, auch für Regattazwecke, steht die Vereinigung einer Reihe von besonderen Eigenschaften im Vordergrund, als da sind niedriges Gewicht, gute Handhabbarkeit, geringe Winddurchlässigkeit, hohe Reißfestigkeit, hohe Formstabilität, geringes Wasseraufnahmevermögen und dergleichen. Ziel eines jeden Segeltuchherstellers ist die Optimierung dieser Eigenschaften in nur einem Tuch für die Segelherstellung.

Um die Festigkeitseigenschaften eines Segels zu optimieren, werden in Segeltuchbahnen häufig Verstärkungsgarne eingearbeitet, die eigene Lagen zwischen zwei äußeren Schichten ausbilden. Für die äußeren Schichten können beispielsweise Polyesterfolien oder dichtes Polyestergewebe verwandt werden. Für die inneren Lagen der zwischen den äußeren Schichten verlegten Garne wird häufig Kevlar® verwandt, eine Aramidfaser. Die zwischen den äußeren Schichten verlegten Garne bilden ein mehr oder weniger regelmäßiges Muster von parallelen Strängen, die in verschiedenen Winkeln zur Längsrichtung (Maschinenrichtung) des Segeltuchs angeordnet sind.

Derartig hergestelltes Segeltuch weist zwar dank der Verstärkungsgarne eine hohe Festigkeit und Belastbarkeit auf, zeichnet sich aber auch durch ein relativ hohes Flächengewicht aus. Das Flächengewicht wird umso höher je höhere Anforderungen an die Dichtigkeits- und Festigkeitseigenschaften der äußeren Lagen gestellt werden. Hinzu kommt, dass hochfeste Materialien, wie Polyamide, zur Wasseraufnahme neigen, was das Flächengewicht eines Segels im Gebrauch weiter erhöht.

Mit Garnen verstärkte Segel sind beispielsweise aus der DE 39 28 312 A1 bekannt. Die dort beschriebenen zusammengesetzten Segel bestehen aus einer Trägerschicht aus einem Gewebe, einer Deckschicht aus einem Folienmaterial und dazwischen in einem Klebestoffbett verlegten Verstärkungsgarnen, die beispielsweise aus Aramidfasern (Kevlar®) bestehen können. Die Garne der Zwischenschicht sind zueinander parallel ausgerichtet und verlaufen quer zu den Verstärkungsgarnen, die in die Trägerschicht eingearbeitet sind. Die Verstärkungsgarne der Trägerschicht verlaufen entlang der Hauptbelastungsrichtung des jeweiligen Tuchsegments im fertigen Segel. Insgesamt ergibt sich ein Muster aus senkrecht zueinander verlaufenden Verstärkungsgarnen im Segeltuch.

Die in konventionellen Segeltuchen verwandten Materialien für die äußeren Lagen (Träger- und Deckschicht) weisen ein relativ hohes Flächengewicht auf. Hinzu kommt das Gewicht aufgenommenen Wassers. Dieses hohe Flächengewicht stellt ein Handicap da, das sich auf die Leistungsfähigkeit des Segels wie auch auf die Handhabbarkeit durch die Mannschaft negativ auswirkt.

Ziel der Erfindung ist die Bereitstellung von Materialien, mit denen dieses hohe Flächengewicht vermindert werden kann.

Diese Aufgabe wird erfindungsgemäß mit einem Segeltuch der eingangs genannten Art gelöst, das zwei äussere Lagen und wenigstens eine innere Lage aus Verstärkungsfilamenten oder -garnen enthält, wobei die beiden äusseren Lagen aus Textillagen aus einem Faservliesstoff mit bidirektional ausgerichteten Filamenten bestehen.

Bidirektional ausgerichtete Filamente verlaufen einander kreuzend in zwei Richtungen, wobei vorzugsweise eine Richtung die Maschinenrichtung ist. Die kreuzenden Filamente sind vorzugsweise in 90°-Richtung zur Maschinenrichtung ausgerichtet.

Derartige Faservliesstoffe sind grundsätzlich bekannt und beispielsweise in der EP 2 578 734 A1 beschrieben. Es handelt sich um Faservliesstoffe, bei den auf eine aus orthogonal zueinander angeordneten Fäden bestehende Trägermatrix eine Vielzahl von parallel ausgerichteten Filamenten aufgebracht ist. Die Trägermatrix bildet ein grobmaschiges Netz, die darauf aufgebrachten Filamente sind vorzugsweise Endlosfilamente, deren Länge durch die Länge des Faservliesstoffes in Maschinenrichtung bestimmt ist. Die unidirektional ausgerichteten Filamente laufen parallel zu der Längsrichtung der Trägermatrix, d. h. die querverlaufenden Fäden der Trägermatrix verlaufen auch quer zu den Filamenten (90°). Die Filamentschicht und die Trägermatrix sind miteinander verbunden, beispielsweise durch thermisches Verschweißen, Druck, eine Kombination der beiden oder Ultraschall. Auch ein Verkleben ist möglich. Die Filamente verlaufen in Maschinenrichtung und geben die 0°-Ausrichtung vor.

Bekannt sind ferner bidirektionale Faservliesstoffe, die zusätzlich zur 0°-Richtung Filamente in der 90°-Richtung aufweisen, d. h. quer zur Maschinenrichtung.

Die erfindungsgemäß verwandten Faservliese weisen ein Flächengewicht von 20 bis 100 g/m² auf, insbesondere von 30 bis 60 g/m² und ganz besonders bevorzugt von etwa 40 g/m². Geeignete Materialien sind Filamente aus thermoplastischen Materialien, beispielsweise Polyester, Polyethylen, Polypropylen, Ethylen-Vinylacetat-Copolymer (EVA), Polyamid (Nylon) und dergleichen, wobei Polyester bevorzugt sind, insbesondere Polyethylenterephthalat. Kombinationen solcher Materialien sind ebenfalls möglich.

Das erfindungsgemäße Segeltuch weist zwei äußere Lagen aus dem hier beschrieben Faservliesstoff auf. Zweckmäßigerweise besteht auch die zweite äußere Lage aus dem Faservliesstoff. Zwischenlagen aus Verstärkungsfilamenten oder -garnen sind zweckmäßig.

Es versteht sich, dass der Faservliesstoff auch als Mittellage in einem mehrlagigen Segeltuch zum Einsatz kommen kann.

Bevorzugte Verstärkungsfilamente sind sogenannte "warp sheets", d. h. unidirektional und nahezu parallel verlegte Filamente eines aufgespreizten Multifilamentgarnes. Derartige warp sheets haben sich als außerordentlich belastbar erwiesen und verleihen dem Segeltuch eine hohe Reißfestigkeit und Formstabilität.

Als Materialien für derartige warp sheets kommen die vorstehend bereits genannten Materialien für die Faservliese in Frage, weiterhin aber auch solche Materialien, wie sie insbesondere zur Verstärkung von Segeltuch eingesetzt werden. Geeignet Materialien sind Filamente aus Thermoplastikmaterialien, beispielsweise Polyester, z.B. Vectran®, Polyethylen, Polypropylen, Ethylen-Vinylacetat-Copolymer (EVA), Polyamid (Nylon) und dergleichen. Besonders geeignet sind auch Aramidfasern, Kohlenstofffasern sowie deren Kombination untereinander oder mit den vorstehend genannten Materialien.

Die Verwendung eines Faservliesstoffes der hier beschriebenen Art bringt eine Reihe von Vorteilen mit sich. Zuerst zu nennen ist das ausgesprochen geringe Flächengewicht von 20 bis 100 g/m² und insbesondere etwa 40 g/m². Dabei können die einzelnen Filamente eine Stärke von 1 bis 20 µm aufweisen. Bei Fertigung aus Polyesterfilamenten kommt die geringe Wasseraufnahmetendenz hinzu sowie eine gewisse Porosität, die dazu führt, dass aufgenommenes Wasser, beispielsweise auch Spritzwasser, schnell wieder an die Atmosphäre abgegeben wird.

Die in Längsrichtung verlaufenden Filamente geben eine hohe Zugfestigkeit, die quer verlaufenden Fäden der Trägermatrix führen zu einer Stabilisierung der Lage der längs verlaufenden Filamente. Soweit eine Trägermatrix vorhanden ist, können auch die gleichen Materialien verwandt werden, wie sie für die bidirektionalen Filamente zum Einsatz kommen.

Die erfindungsgemäßen Segeltuch weisen neben zwei äußeren Lagen wenigstens eine innere Lage aus Verstärkungsfilamenten oder -garnen auf. In der Regel liegen wenigstens drei innere Lagen aus Verstärkungsfilamenten oder -garnen vor, in besonderen Fällen auch fünf oder mehr Lagen. Dabei verlaufen diese Verstärkungsfilamente oder -garne in jeder einzelnen Lage im Wesentlichen parallel und entlang der Hauptbelastungslinien, wie sie in den aus dem erfindungsgemäßen Segeltuch gefertigten Segeln auftreten. Bevorzugte Ausrichtung der Verstärkungsgarne in den einzelnen inneren Lagen sind 0° zur Maschinenrichtung des Segeltuchs, 20 bis 40°, 75 bis 105° und insbesondere 0°, 30° und 90°. Weitere Lagen können beispielsweise in einem Winkel von 330° oder 60° verlaufen.

Geeignete Materialien für die Verstärkungsfilamente oder -garne sind PES, Aramid, HPPE. Carbonfasern können ebenfalls verwandt werden. Beispiele für Aramidgarne sind Twaron®, Tecnora Black® und Kevlar®. Als LCM-Garn kommt insbesondere Vectran® infrage, als HPPE Dyneema®.

Die Verstärkungslagen werden zu den äußeren Lagen in einem üblichen Kleberbett verlegt, vorzugsweise unter Spannung, wobei das Kleberbett ein Flächengewicht von 20 bis 40 g/m² aufweist. Es kommen übliche thermoplastische Kleber infrage, aber auch reaktive Kleber, etwa auf Polyurethanbasis.

Die Garndichte in den einzelnen Lagen variiert zwischen 3000 und 15000 dpi und richtet sich nach den üblichen Gegebenheiten, etwa Bootsgröße, Segelart (Großsegel, Fockssegel, Genua) und Einsatzbereich (Windstärke).

Die einzelnen Lagen werden unter Wärmezufuhr und Druck miteinander verbunden.

Es ist ohne weiteres möglich in den einzelnen Lagen unterschiedliche Materialien einzusetzen. Beispielsweise kann in den äußeren Lagen ein Faservliesstoff mit einer Folie kombiniert werden oder aber es können Faservliesstoffe unterschiedlichen Flächengewichts eingesetzt werden. In den inneren Verstärkungslagen können Garne aus unterschiedlichen Materialien eingesetzt werden mit unterschiedlicher Garndichte.

Weiterhin ist es möglich, neben Lagen aus Faservlies und warp-sheets auch Gittergewebe einzusetzen. Diese Gittergewebe können herkömmliche Gewebe sein, in denen sich die einzelnen Fäden in einem Winkel von 90° kreuzen, aber auch spezielle Gewebe mit Fäden, die von dem 90°-Raster abweichen. Dies ermöglicht es, Gittergewebe einzusetzen, deren Fäden entlang der Hauptbelastungslinien eines Segels verlaufen. Solche off-angle-Gewebe haben zum Beispiel Abweichungen von der 90°-Grad-Richtung von bis zu 40° (50° zur Maschinenrichtung).

Die Verwendung von Faservliesen in der Außenschicht ermöglicht eine problemlose Beschichtung zum UV-Schutz insbesondere auch für innere Lagen, daneben auch einen mechanischen Schutz, da eine Beschädigung einzelner Fasern nicht zur Fortpflanzung von Fehlern führt. Es ergibt sich insgesamt eine glattere Oberfläche.

Die die äußeren Lagen bildenden Faservliesstoffe können ohne weiteres gefärbt, bedruckt und auch metallisiert werden. Eine Wasser abweisende Imprägnierung ist ebenfalls möglich.

Aus dem erfindungsgemäßen Segeltuch können Segel nach allen üblichen Verfahren gefertigt werden, insbesondere auch nach dem Cross-cut-Verfahren.

### Beispiel

Ein erfindungsgemäßes Segeltuch wurde mit den folgenden Lagen hergestellt:
1. Außenlage Faservliesstoff mit 0° und 90° ausgerichteten PET-Fasern (Maschinenrichtung 0°);
2. Lage 6337 dpi Aramidgarn, 0°
3. Lage 3168 dpi Aramidgarn, 30°
4. Lage 3168 dpi Aramidgarn, 90°
5. (äußere) Lage Faservliesstoff, wie 1. Lage.

## Patentansprüche

1. Segeltuch mit zwei äußeren Lagen und wenigstens einer inneren Lage aus Verstärkungsfilamenten oder -garnen, **dadurch gekennzeichnet, dass** die beiden äußeren Lagen aus Textillagen aus einem Faservliesstoff mit bidirektional ausgerichteten Filamenten bestehen..

2. Segeltuch nach Anspruch 1, **dadurch gekennzeichnet, dass** der Faservliesstoff ein Flächengewicht von 20 bis 100 g/m² aufweist.

3. Segeltuch nach Anspruch 2, **dadurch gekennzeichnet, dass** der Faservliesstoff ein Flächengewicht von 30 bis 60 g/m² aufweist.

4. Segeltuch nach einem der vorstehenden Ansprüche, **dadurch gekennzeichnet, dass** der Faservliesstoff in Maschinenrichtung (0°-Richtung) ausgerichtete Filamente aufweist.

5. Segeltuch nach Anspruch 4, **dadurch gekennzeichnet, dass** der Faservliesstoff bidirektional in 0°- und 90°-Richtung ausgerichtete Filamente aufweist.

6. Segeltuch nach einem der vorstehenden Ansprüche, **dadurch gekennzeichnet, dass** der Faservliesstoff Filamente aus Polyester, Polyethylen, Polypropylen, Ethylen-Vinylacetat und Polyamid aufweist.

7. Segeltuch nach Anspruch 6, **dadurch gekennzeichnet, dass** der Faservliesstoff aus Polyesterfilamente aufweist.

8. Segeltuch nach einem der vorstehenden Ansprüche, **gekennzeichnet durch** wenigstens drei innere Lagen aus Verstärkungsfilamenten oder -garnen.

9. Segeltuch nach Anspruch 8, **dadurch gekennzeichnet, dass** die Verstärkungsfilamente oder -garne, in Maschinenrichtung des Faservliesstoffs, in einem Winkel von 0°, 20° bis 40° und 75° bis 105° verlaufen.

10. Segeltuch nach Anspruch 8 oder 9, **dadurch gekennzeichnet, dass** die Verstärkungsfilamente oder -garne in Bezug auf die Maschinenrichtung des Faservliesstoffs in einem Winkel von 0°, 30° und 90° verlaufen.

11. Segeltuch nach einem der Ansprüche 7 bis 9, **dadurch gekennzeichnet, dass** die Verstärkungsfilamente oder -garne in einem Kleberbett verlegt sind.

12. Segeltuch nach Anspruch 11, **dadurch gekennzeichnet, dass** das Kleberbett ein Gewicht von 20 bis 40 g/m² aufweist.

13. Segeltuch nach einem der Ansprüche 1 bis 12, **dadurch gekennzeichnet, dass** die Verstärkungsfilamente als warp sheets vorliegen.

14. Segeltuch nach Anspruch 13, **dadurch gekennzeichnet, dass** die Verstärkungsfilamente aus Polyester, Polyethylen, Polypropylen, Ethylen-Vinylacetat, Polyamid, Aramid, Kohlenstofffasern oder beliebigen Kombinationen derselben bestehen.

15. Segel, hergestellt aus einem Segeltuch nach einem der Ansprüche 1 bis 14.

## Claims

1. Sailcloth comprising two outer layers and at least one inner layer made of reinforcing filaments or yarns, **characterised in that** the two outer layers consist of textile layers made of a non-woven fabric with bidirectionally oriented filaments.

2. Sailcloth according to claim 1, **characterised in that** the non-woven fabric has a weight per unit area of from 20 to 100 g/m².

3. Sailcloth according to claim 2, **characterised in that** the non-woven fabric has a weight per unit area of from 30 to 60 g/m².

4. Sailcloth according to any of the preceding claims, **characterised in that** the non-woven fabric comprises filaments oriented in the machine direction (0° direction).

5. Sailcloth according to claim 4, **characterised in that** the non-woven fabric comprises filaments that are bidirectionally oriented in the 0° direction and 90° direction.

6. Sailcloth according to any of the preceding claims, **characterised in that** the non-woven fabric comprises filaments made of polyester, polyethylene, polypropylene, ethylene-vinyl acetate and polyamide.

7. Sailcloth according to claim 6, **characterised in that** the non-woven fabric comprises polyester filaments.

8. Sailcloth according to any of the preceding claims, **characterised by** at least three inners layer made of reinforcing filaments or yarns.

9. Sailcloth according to claim 8, **characterised in that** the reinforcing filaments or yarns extend at an angle of 0°, 20° to 40° and 75° to 105° in the machine direction of the non-woven fabric.

10. Sailcloth according to claim 8 or 9, **characterised in that** the reinforcing filaments or yarns extend at an angle of 0°, 30° and 90° relative to the machine direction of the non-woven fabric.

11. Sailcloth according to any of claims 7 to 9, **characterised in that** the reinforcing filaments or yarns are laid in an adhesive bed.

12. Sailcloth according to claim 11, **characterised in that** the adhesive bed has a weight of from 20 to 40 g/m².

13. Sailcloth according to any of claims 1 to 12, **characterised in that** the reinforcing filaments are provided in the form of warp sheets.

14. Sailcloth according to claim 13, **characterised in that** the reinforcing filaments consist of polyester, polyethylene, polypropylene, ethylene-vinyl acetate, polyamide, aramid, carbon fibres, or any combination thereof.

15. Sail made of a sailcloth according to any of claims 1 to 14.

## Revendications

1. Toile pour voiles avec deux couches extérieures et au moins une couche intérieure composée de filaments ou de fils de renforcement, **caractérisée en ce que** les deux couches extérieures consistent en des couches textiles constituées d'un tissu non-tissé avec des filaments à orientation bidirectionnelle.

2. Toile pour voiles selon la revendication 1, **caractérisée en ce que** le tissu non-tissé présente un poids surfacique de 20 à 100 g/m².

3. Toile pour voiles selon la revendication 2, **caractérisée en ce que** le tissu non-tissé présente un poids surfacique de 30 à 60 g/m².

4. Toile pour voiles selon l'une quelconque des revendications précédentes, **caractérisée en ce que** le tissu non-tissé présente des filaments orientés dans le sens machine (direction à 0°).

5. Toile pour voiles selon la revendication 4, **caractérisée en ce que** le tissu non-tissé présente des filaments à orientation bidirectionnelle dans une direction à 0° et à 90°.

6. Toile pour voiles selon l'une quelconque des revendications précédentes, **caractérisée en ce que** le tissu non-tissé présente des filaments composés de polyester, de polyéthylène, de polypropylène, d'éthylène-acétate de vinyle et de polyamide.

7. Toile pour voiles selon la revendication 6, **caractérisée en ce que** le tissu non-tissé présente des filaments en polyester.

8. Toile pour voiles selon l'une quelconque des revendications précédentes, **caractérisée par** au moins trois couches intérieures composées de filaments ou de fils de renforcement.

9. Toile pour voiles selon la revendication 8, **caractérisée en ce que** les filaments ou les fils de renforcement s'étendent, dans le sens machine du tissu non-tissé, selon un angle de 0°, 20° à 40° et 75° à 105°.

10. Toile pour voiles selon la revendication 8 ou 9, **caractérisée en ce que** les filaments ou les fils de renforcement s'étendent par rapport au sens machine du tissu non-tissé selon un angle de 0°, 30° et 90°.

11. Toile pour voiles selon l'une quelconque des revendications 7 à 9, **caractérisée en ce que** les filaments ou fils de renforcement sont posés dans un lit de colle.

12. Toile pour voiles selon la revendication 11, **caractérisée en ce que** le lit de colle présente un poids de 20 à 40 g/m².

13. Toile pour voiles selon l'une quelconque des revendications 1 à 12, **caractérisée en ce que** les filaments de renforcement se présentent sous la forme de warp sheets (nappes d'ourdissage).

14. Toile pour voiles selon la revendication 13, **caractérisée en ce que** les filaments de renforcement consistent en polyester, polyéthylène, polypropylène, éthylène-acétate de vinyle, polyamide, aramide, fibres de carbone ou quelconques combinaisons de ceux-ci.

15. Voile fabriquée à partir d'une toile pour voiles selon l'une quelconque des revendications 1 à 14.
